# EUROPÄISCHE PATENTANMELDUNG

(11) **EP 2 388 670 A1**
(43) Veröffentlichungstag der Anmeldung: **23.11.2011**
(21) Anmeldenummer: 11165861.3
(22) Anmeldetag: 12.05.2011
(51) Int. Cl.: G05B 19/418

(54) **Verfahren und Vorrichtung zum planen und konfigurieren von Anlagen zur Herstellung von Druckprodukten**

(30) Priorität: 17.05.2010 CH 7792010
(71) Anmelder: Müller Martini Holding AG, 6052 Hergiswil (CH)
(72) Erfinder: Kälin, Beat, 8556, Wigoltingen (CH); Leonhartsberger, Johann, 6972, Fussach (AT); Abegglen, Christian, 8500, Frauenfeld (CH)

(57) **Zusammenfassung**

Die Erfindung betrifft ein Verfahren zum Planen und Konfigurieren von Anlagen zur Herstellung von Druckprodukten mit einer Mehrzahl von in einer Fertigungslinie (1) angeordneten Maschinen, wobei jeder Maschine ein zumindest eine Sichtdarstellung der Maschine ermöglichende Grafikdaten enthaltendes Datenmodul (27) zugeordnet ist, wobei mindestens zwei Maschinen zu einer Fertigungslinie (1) oder zu einem Teil einer Fertigungslinie (1) zusammengestellt und die den zusammengestellten Maschinen zugeordneten Datenmodule (27) ausgewählt werden und auf Grundlage der Grafikdaten der ausgewählten Datenmodule (27) eine Sichtdarstellung der zusammengestellten Maschinen erzeugt wird.

## Beschreibung

Die Erfindung betrifft Verfahren zum Planen und Konfigurieren von Anlagen zur Herstellung von Druckprodukten mit einer Mehrzahl von in einer Fertigungslinie angeordneten Maschinen, wobei jeder Maschine ein zumindest eine Sichtdarstellung der Maschine ermöglichende Grafikdaten enthaltendes Datenmodul zugeordnet ist, eine Vorrichtung zur Ausführung derartiger Verfahren und eine Anlage zur Herstellung von Druckprodukten mit einer solchen Vorrichtung.

Bei der industriellen Druckweiterverarbeitung werden Vorprodukte, wie etwa einzelne, eine Mehrzahl von Seiten des fertigen Druckprodukts aufweisende Druckbogen, durch mehrere zeitlich nacheinander auszuführende Bearbeitungen zu fertigen Druckprodukten, wie Zeitschriften, Katalogen, Büchern, Zeitungen oder ähnlichen Erzeugnissen, bearbeitet. Diese Bearbeitung wird auf einer Mehrzahl von zu Fertigungslinien verketteten Maschinen durchgeführt. Dabei übernehmen Maschinen die zur Herstellung der fertigen Druckprodukte dienenden Halbfabrikate von einer vorgelagerten Maschine und geben diese nach der Bearbeitung an eine nachfolgende Maschine weiter. Die Übergabe der Halbfabrikate und die Bearbeitung durch die Maschinen können automatisiert erfolgen. Je nach der Art der Maschinen erfolgen die Übergaben bzw. Übernahmen taktsynchron, asynchron oder gemischt.

Bei der Druckweiterverarbeitung kann bspw. eine Bindeanlage zum Einsatz kommen. Diese umfasst üblicherweise eine Zusammentragmaschine, mit der eine Anzahl von ein fertiges Druckprodukt bildenden Druckbogen zusammengetragen wird, eine Überführungseinrichtung, mit der die zusammengetragenen Druckbogen an eine Bindeeinrichtung, wie etwa einen Klebebinder, überführt werden, eine Abtransporteinrichtung, die bei Einsatz eines Klebebinders eine Abbindestrecke für den Klebstoff enthalten kann, eine Schneidmaschine, mit der die Seitenkanten des mit dem Klebebinder erhaltenen Halbfabrikats ggf. dreiseitig beschnitten werden, eine Stapeleinrichtung, mit der die Druckprodukte gestapelt werden, und eine Pallettiereinrichtung, mit der die gestapelten Druckprodukte pallettiert werden, wobei weitere Maschinen zutreten können, wie etwa eine Einsteckmaschine zum Einstecken von losen Produkten in die gebundenen Druckprodukte.

Die Steuerung der Zusammentragmaschine, der Überführungseinrichtung und der Bindeeinrichtung erfolgt üblicherweise mittels eigener Steuervorrichtungen, die mittels standardisierten Schnittstellen miteinander kommunizieren. Diese Steuervorrichtungen können zusätzlich mit einer zentralen Steuereinrichtung verbunden sein. Die Vorprodukte werden innerhalb dieser Maschinen Kettenteilungen zugeordnet bzw. getaktet gefördert. Die Synchronisierung der einzelnen Maschinen zueinander ist erforderlich, um die Druckprodukte taktsynchron von einer Maschine an die nächste zu überführen. Im Bereich des Abtransports eingesetzte Maschinen können hingegen ungetaktet bzw. ohne Synchronisierung betrieben werden. Das gilt insbesondere für die Transportbänder, die als Abbindestrecke für den Kühl-und Leimaushärtungsprozess oder als Verbindung von Weiterverarbeitungsmaschinen, wie etwa Weichen, Trennsägen, Wendebändern, Entstaplern, Dreischneidern, Staplern, Verblockungseinrichtungen usw., einsetzbar sind.

Die Planung neuer Fertigungslinien muss individuell auf die konkreten Bedürfnisse jedes einzelnen Kunden abgestimmt werden. Dabei sind neben den prozessrelevanten Anforderungen auch durch bestehende Gebäude vorgegebene oder durch die Logistik der herzustellenden Druckprodukte bedingte Anforderungen zu erfüllen. Insbesondere die die einzelnen Maschinen miteinander verbindenden Fördersysteme bzw. Fördermaschinen können zur Anpassung an die Logistik und die durch die vorhandenen Gebäude vorgegebenen Bedingungen stark voneinander abweichen. Das gilt sowohl verfahrenstechnisch als auch im Layout dieser Fördereinrichtungen von Fertigungslinie zu Fertigungslinie.

Üblicherweise wird eine Anlage zur Herstellung von Druckprodukten automatisiert gesteuert und geregelt. Dabei können die Logistik und Leistungsverteilung der Produktion berücksichtigt werden. Für die Erfüllung von lokalen Steuerungsaufgaben können einzelne Maschinen, wie etwa Zusammentragmaschinen, mit gesonderten Maschinensteuerungen ausgestattet bzw. verbunden sein, wobei sich einfache Maschinen eine gemeinsame Maschinensteuerung teilen können. Herkömmliche Maschinensteuerungen werden durch speicherprogrammierbare Steuerungen (SPS) oder Personalcomputer (PC) als Hardware verwirklicht, die mit den erforderlichen Programmen zur Steuerung der einzelnen Maschinen ausgestattet sind. Für die Bedienung einer Maschinensteuerung ist eine Vielzahl von Eingabe- und Ausgabegeräten bekannt. Dazu gehören Tasten, Signallampen, Tastaturen, Bildschirme, Touch Screens usw.. Zum Konfigurieren und Bedienen der gesamten Anlage kann zusätzlich eine zentrale Liniensteuerung bzw. ein Leitsystem vorgesehen sein. Bekannte Leitsysteme sind über ein Bus-System, bspw. CAN, Ethernet-Powerlink oder mittels digitalen oder analogen Eingängen oder Ausgängen mit den Maschinensteuerungen bzw. bei einfachen Maschinen, wie Transportbändern, mit den Antrieben oder Tasten, Lampen und dgl. der Maschinen direkt verbunden. Die für das Leitsystem benötigten technischen Unterlagen, wie Schaltschemata, Stücklisten für die Steuerungshardware und die Steuerungssoftware sowie deren Konfigurierung werden durch interne Steuerungsfachleute der Lieferfirma erstellt und gepflegt. Jede für eine Anlage erstellte Steuerung ist somit anlagenspezifisch und kann nur durch einen Steuerungsfachmann mit den nötigen Kenntnissen und mit einem entsprechenden Entwicklungssystem hergestellt oder an ein geändertes Anlagen-Layout angepasst werden. Nach der Inbetriebnahme beim Anwender lassen sich über Fernzugriff die Liniensteuerung und die mit ihr über Busverbindungen verbundene Maschinensteuerung analysieren und erforderliche Korrekturen an der Steuerungssoftware direkt aus dem Lieferwerk vornehmen.

Die vorstehend beschriebene Planung und Konfigurierung neuer Anlagen zum Herstellen von Druckprodukten ist mit einem hohen Aufwand verbunden. Der Erfindung liegt die Aufgabe zugrunde, das Planen und Konfigurieren neuer Anlagen zur Herstellung von Druckprodukten sicherer und schneller zu gestalten.

Erfindungsgemäss wird diese Aufgabe durch eine Weiterbildung der bekannten Verfahren gelöst, die im wesentlichen dadurch gekennzeichnet ist, dass mindestens zwei Maschinen zu einer Fertigungslinie oder zu einem Teil einer Fertigungslinie zusammengestellt und die den zusammengestellten Maschinen zugeordneten Datenmodule ausgewählt werden und auf Grundlage der Grafikdaten der ausgewählten Datenmodule eine Sichtdarstellung der zusammengestellten Maschinen erzeugt wird.

Durch das erfindungsgemässe Verfahren wird auch während des Planungsvorgangs bereits eine Sichtkontrolle der Anlage ermöglicht. Dadurch kann eine den besonderen Anforderungen des Anwenders zuwiderlaufende Zusammenstellung frühzeitig erkannt und entsprechend korrigiert werden. Bei dem erfindungsgemässen Verfahren werden also Datenmodule verwendet, die zumindest Grafikdaten für die Visualisierung der Anlage enthalten. Die Datenmodule sind in einer mir der Steuereinrichtung verbundenen Datenbank abgespeichert.

Im Sinne einer weiteren Vereinfachung hat es sich als sinnvoll erwiesen, wenn die Grafikdaten mögliche Kopplungsbereiche der zusammnezustellenden Maschinen, an denen die Maschinen miteinander verbunden werden können, bezeichnende Schnittstellendaten enthalten und die Sichtdarstellung der zusammengestellten Maschinen automatisch unter Berücksichtigung der Schnittstellendaten so erfolgt, dass die zusammengestellten Maschinen an ihren Kopplungsbereichen miteinander verbunden sind. Bei der Ausführung dieser bevorzugten Verfahren wird nach Auswahl eines der Datenmodule der zusammengestellten Maschinen die Sichtdarstellung der entsprechenden Maschine bspw. mit Hilfe einer geeigneten Eingabeeinrichtung, wie etwa einer Computer-Maus, in die Nähe des Kopplungsbereichs bereits ausgewählter Maschinen positioniert. Sodann erfolgt bei der Ausführung erfindungsgemäss bevorzugter Verfahren automatisch eine solche Positionierung der gerade neu ausgewählten Maschine, dass diese mit ihrem Kopplungsbereich an den Kopplungsbereich der bereits zuvor ausgewählten Maschine angeschlossen ist.

Mit Hilfe erfindungsgemässer Verfahren können bei einer besonders bevorzugten Ausführungsform der Erfindung neben statischen Darstellungen der zu Fertigungslinien zusammengestellten Maschinen auch deren funktionelles Zusammenwirken verdeutlichende Darstellungen erzeugt werden, wobei auf Grundlage der Grafikdaten das Zusammenwirken der zusammengestellten Maschinen verdeutlichende Sichtdarstellungen erzeugt werden, insbes. zwei, drei oder mehr zeitlich und/oder räumlich voneinander getrennte Sichtdarstellungen der Maschinen in unterschiedlichen Betriebszuständen erzeugt werden.

Eine weitere Vereinfachung beim Planen und Konfigurieren von Anlagen zur Herstellung von Druckprodukten ist erreichbar, wenn mindestens zwei Datenmodule zur Ansteuerung der zusammenzustellenden Maschinen betreibbare Programme bildende Programmdaten enthalten und die Programmdaten bei der Auswahl dieser Datenmodule zu einem zur Ansteuerung der zusammengestellten Maschinen betreibbaren Programm verknüpft werden. Gemäss dieser Weiterbildung der Erfindung erfolgt also eine automatische Verlinkung der Programmdaten, so dass die Programmdaten der einzelnen ausgewählten Maschinen zu einer gemeinsamen Steuerungssoftware für die zusammengestellte Anlage verknüpft werden. Dazu können die Programmdaten auch in eine übergeordnete Programmstruktur eingebunden werden.

Die zu einzelnen Anlagen zusammenstellbaren Maschinen sind üblicherweise sehr variabel einsetzbar. Sie können zum Verwirklichen unterschiedlicher Betriebsarten auf Grundlage entsprechend angepasster Programme angesteuert werden. Bei Einsatz in einer nach Kundenwünschen zu konfigurierenden Anlage wird jedoch häufig nur eine besondere Betriebsart der Maschine genutzt. Zur Vereinfachung der Steuerungssoftware hat es sich daher als sinnvoll erwiesen, wenn die Programmdaten eines Datenmoduls Programme zum Betreiben der Maschine in mindestens einer Betriebsart enthaltende gesonderte Programmroutinen bilden und vor, während oder nach der Auswahl dieses Datenmoduls eine Programmroutine ausgewählt und mit den Programmdaten anderer Datenmodule zu einer zum Ansteuern der zusammengestellten Maschinen betreibbaren Steuerungssoftware mit der entsprechenden Programmroutine verknüpft werden. Als Ergebnis entsprechender Verfahren wird also eine Steuerungssoftware erhalten, mit der die entsprechende Maschine in nur einer Betriebsart betrieben werden kann, was allerdings zur Vereinfachung der Steuerungssoftware beiträgt.

Im Rahmen der Erfindung ist auch daran gedacht, dass mindestens ein Programm und/oder eine Programmroutine parametrierbar ist. Dabei können Grenzwerte einiger Parameter wie beispielsweise die Dimensionen der zu verarbeitenden Druckprodukte, die Maschinen- oder Transportgeschwindigkeiten, die Nachlaufzeiten und dergleichen, festgelegt werden. Das dient zur weiteren Vereinfachung der Steuerungssoftware.

Mit den bislang angesprochenen Gesichtspunkten der Erfindung ist es möglich, eine neue Anlage zum Herstellen von Druckprodukten zu planen und zu konfigurieren und dabei gleichzeitig automatisch eine Steuerungssoftware zu erzeugen. Eine weitere Vereinfachung bei der Planung von Anlagen zum Herstellen von Druckprodukten ist erreichbar, wenn mindestens ein Datenmodul einzelne Bauelemente der entsprechenden Maschine darstellende Teiledaten und/oder eine elektrische Schaltung der Maschine darstellende Schaltungsdaten aufweist und bei der Auswahl des mindestens einen Datenmoduls automatisch auf Grundlage der Teiledaten der Datenmodule eine die Bauelemente der zusammengestellten Maschinen darstellende Stückliste und/oder auf Grundlage der Schaltungsdaten ein die elektrische Verknüpfung der zusammengestellten Maschinen darstellendes Schaltschema erzeugt werden.

Bei dieser Weiterbildung der Erfindung wird also bei der Planung und Konfigurierung der Maschinen auch automatisch eine Stückliste der gesamten Anlage sowie ein vollständiges Schaltschema der Anlage hergestellt. Dadurch wird das Planen und Konfigurieren neuer Anlagen weiter vereinfacht.

Zu Kontrollzwecken kann daran gedacht werden, auf Grundlage der Teiledaten eine Sichtdarstellung der Stückliste und/oder auf Grundlage der zusammengestellten Schaltungsdaten eine Sichtdarstellung des Schaltschemas zu erzeugen, wobei die die ausgewählten Maschinen enthaltende Fertigungslinie und/oder die Stückliste und/oder das Schaltschema dargestellt werden kann. Es ist auch daran gedacht, in einer Darstellung nur die Fertigungslinie bzw. die die bislang ausgewählten Maschinen der Fertigungslinie darstellende Sichtdarstellung zu erzeugen und ansprechend auf einen entsprechenden Steuerbefehl in einer anderen Ansicht die Stückliste und das Schaltschema darzustellen.

Wie der vorstehenden Erläuterung herkömmlicher Verfahren zu entnehmen ist, hat es sich weiter als vorteilhaft erwiesen, wenn auf Grundlage von eines die Fertigungslinie aufnehmende Gebäudes darstellenden Gebäudedaten und den Grafikdaten eine die Anordnung der Fertigungslinie und/oder von Teilen davon in dem Gebäude zeigende Sichtdarstellung erzeugt wird.

Eine erfindungsgemässe Vorrichtung zum Planen und Konfigurieren von Anlagen zum Herstellen von Druckprodukten mit einer Mehrzahl in einer Fertigungslinie angeordneten Maschinen weist im wesentlichen eine eine Mehrzahl von Datenmodulen enthaltende Datenbank, eine Anzeigeeinrichtung zur Sichtdarstellung von die Datenmodule kennzeichnenden Informationsinhalten, eine Wähleinrichtung zum Auswählen einzelner Datenmodule und eine Steuereinrichtung zur eine Sichtdarstellung der Fertigungslinie oder von Teilen davon mit den Maschinen entsprechend den ausgewählten Datenmodulen bewirkenden Ansteuern der Anzeigeeinrichtung auf. Dabei kann die Wähleinrichtung in Form einer herkömmlichen Computer-Maus und/oder eines Touch Pads verwirklicht sein. Es ist auch an den Einsatz eines Touch Screens zum Verwirklichen der Wähleinrichtung gedacht. Die Datenmodule der mit der Steuerungsvorrichtung verbundenen Datenbank einer erfindungsgemässen Vorrichtung können Grafikdaten und/oder Programmdaten und/oder Teiledaten und/oder Schaltungsdaten aufweisen. Im Sinne einer Integration von Steuerungskomponenten hat es sich als zweckmässig erwiesen, wenn die Steuereinrichtung einer erfindungsgemässen Vorrichtung auch noch zum Ansteuern einer Anlage zum Herstellen von Druckprodukten einsetzbar ist.

Eine erfindungsgemässe Anlage zum Herstellen von Druckprodukten weist im wesentlichen eine Mehrzahl von in einer Fertigungslinie angeordneten Maschinen und eine erfindungsgemässe Vorrichtung auf, wobei die zum Einsatz kommende Steuereinrichtung der erfindungsgemässen Vorrichtung zweckmässigerweise auch zum Ansteuern der einzelnen Maschinen der Fertigungslinie ausgelegt ist.

Eine erfindungsgemässe Anlage kann neben der erfindungsgemässen Vorrichtung auch Maschinen der Fertigungslinie aufweisen, die als Anleger, Zusammentragmaschine, Überführungseinrichtung, Binder, insbes. Klebebinder, Abtransporteinrichtung, Abbindestrecke, Notauslageweiche, Schneidmaschine, Stapeleinrichtung, Auslageeinrichtung, Einsteckeinrichtung oder als Sammelhefter ausgebildet sind.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich Bezug genommen wird, erläutert. In der Zeichnung zeigt:
- **Fig. 1**: eine schematische Darstellung einer erfindungsgemässen Anlage zur Herstellung von Druckprodukten,
- **Fig. 2**: ein Datenmodul einer erfindungsgemässen Vorrichtung,
- **Fig. 3**: eine Darstellung zur Erläuterung erfindungsgemässer Verfahren,
- **Fig. 4**: eine weitere Darstellung zur Erläuterung erfindungsgemässer Verfahren und
- **Fig. 5 - 7**: Darstellungen zur Erläuterung erfindungsgemässer Verfahren.

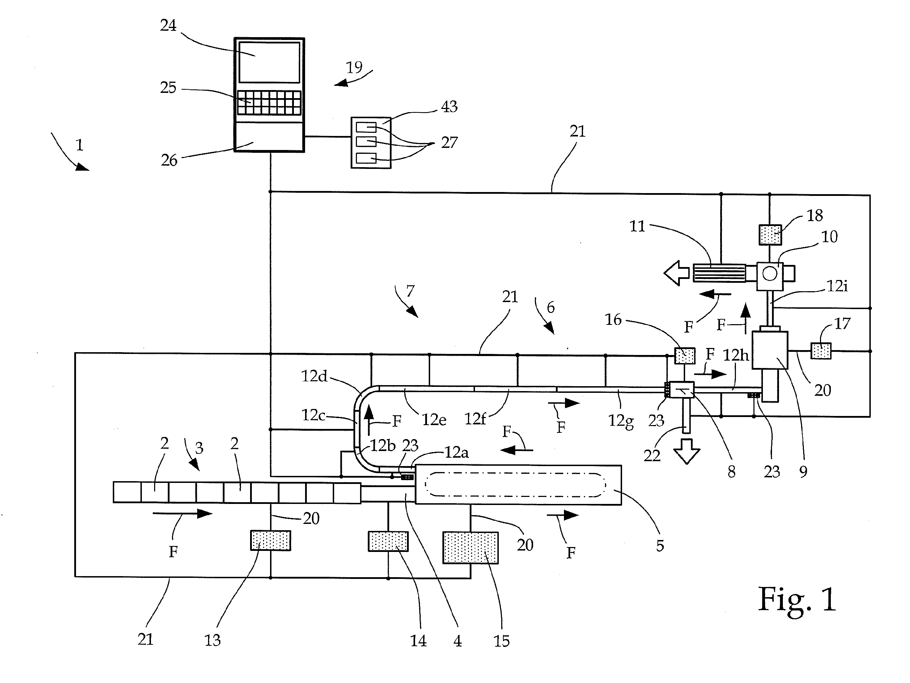

In Fig. 1 ist in stark vereinfachter Darstellung eine Anlage zum Herstellen von klebegebundenen Druckprodukten dargestellt, bei der eine Anzahl von Maschinen in einer Fertigungslinie 1 angeordnet ist. Im Folgenden wird der Begriff "Fertigungslinie" zur Bezeichnung einer Anordnung von miteinander verbundenen Maschinen zur Bearbeitung von Druckprodukten benutzt, wobei dieser Anordnung eine gemeinsame Liniensteuerung 19 zur Steuerung der Fertigungslinie 1 zugeordnet ist.

In einer aus einer Mehrzahl von in Förderrichtung F hintereinander angeordneten Anlegern 2 gebildeten Zusammentragmaschine 3 werden eine Anzahl unterschiedlich bedruckter Druckbogen zu losen Buchblocks zusammengetragen. In einer nachfolgenden Überführungseinrichtung 4 können an den losen Buchblocks zusätzliche Bearbeitungen durchgeführt werden, wie bspw. Vorsatzbogen oder Beilagen zugeführt oder die Buchblocks seitlich mittels Drahtheftung verbunden werden. In einem längs der Fertigungslinie 1 hinter der Überführungseinrichtung 4 angeordneten Klebebinder 5 werden die Buchblocks im Buchrückenbereich bearbeitet und beleimt und mit einem Umschlag versehen. Die roh gebundenen Druckprodukte werden anschliessend an eine Abtransporteinrichtung 6 abgegeben, die im wesentlichen durch eine Abbindestrecke 7 für den Klebstoff, eine Notauslageweiche 8, eine Schneidmaschine 9 für den dreiseitigen Randbeschnitt der Druckprodukte, eine Stapeleinrichtung 10 und eine Auslageeinrichtung 11 gebildet wird.

Die Abbindestrecke 7 besteht aus einer Mehrzahl von in Förderrichtung F teilweise hintereinander angeordneten Transportbändern 12a bis 12i, die als Linearbänder oder als Kurvenbänder ausgebildet sein können. Die Zusammentragmaschine 3, die Überführungseinrichtung 4, der Klebebinder 5, die Notauslageweiche 8, die Schneidmaschine 9 und die Stapeleinrichtung 10 verlangen eine aufwendige Steuerung. Diesen Maschinen sind eigene Maschinensteuerungen zugeordnet. Beispielsweise ist die Zusammentragmaschine 3 mit einer Zusammentragmaschinensteuerung 13, die Überführungseinrichtung 4 mit einer Überführungssteuerung 14, der Klebebinder 5 mit einer Klebebindersteuerung 15, die Notauslageweiche 8 mit einer Notauslagenweichensteuerung 16, die Schneidmaschine 9 mit einer Schneidmaschinensteuerung 17 und die Stapeleinrichtung 10 mit einer Stapelsteuerung 18 über Steuerleitungen 20 verbunden. Die Steuerleitungen 20 können als digitale oder analoge Signalleitungen oder als Feldbus ausgebildet sein. Die Maschinensteuerungen 13, 14, 15, 16, 17 und 18 sind über eine weitere Busverbindung 21 miteinander und mit der Liniensteuerung 19 verbunden.

Einfach zu steuernde Maschinen, wie bspw. die Transportbänder 12a bis 12i, ein Notauslageband 22 und die Auslageeinrichtung 11 sind ebenfalls durch eine Busverbindung 21 mit den Maschinensteuerungen 13, 14, 15, 16, 17, 18 und der Liniensteuerung 19, oder mittels digitalen oder analogen Signalleitungen direkt mit der Liniensteuerung 19 verbunden.

Im Rahmen der Erfindung wird unter einem Bus bzw. Feldbus eine echtzeitfähige Kommunikationsverbindung zwischen Steuerungen bzw. zwischen Steuerungen und Sensoren / Aktoren verstanden. In der Steuerungstechnik eingesetzte Busse sind unter Namen wie CAN-Bus, Ethernet-Powerlink usw. bekannt. Für Maschinen ohne eigene Steuerung können zwischen der Liniensteuerung 19 und der entsprechenden Maschine weitere Elektrokomponenten, wie bspw. Frequenzumrichter, Servoantriebe, Verstärker, Signalübertragungseinrichtungen oder ähnliches angeordnet sein, wobei diese Elektrokomponenten physisch in einem Schaltschrank der Liniensteuerung 19, in einem separaten Schaltschrank oder direkt an einer Maschine angeordnet sein können.

Für die Anzeige von Betriebszuständen bestimmte Signalanzeigen und für die Bedienung erforderliche Eingabetasten, wie Start-, Stopp-, Notstopp-Tasten u. dgl., sind ebenfalls direkt mit der Liniensteuerung 19 über die Busverbindung 21 oder über direkte Signalverbindungen mit der Liniensteuerung 19 verbunden. Derartige Tasten und Signalanzeigen sind üblicherweise zu Bedieneinheiten 23 zusammengefasst und an einer beliebigen Stelle in der Fertigungslinie 1 einbaubar. Die Liniensteuerung 19 kann für den Austausch von Daten zusätzlich mit weiteren Rechnern innerhalb eines Betriebs verbunden sein, wodurch bspw. aus einer zentralen Auftragsverwaltung die Fertigungsaufträge an die Fertigungslinie 1 übermittelt werden und einer Betriebsdatenerfassungseinrichtung die Betriebsdaten übermittelt werden oder eine Verbindung mit dem Internet aufgebaut werden kann.

Die beschriebenen Funktionen werden ermöglicht, indem die Liniensteuerung 19 mit einer optischen Anzeigeeinrichtung 24, einer Eingabeeinrichtung 25 und einer Steuereinrichtung 26 ausgeführt wird. Als Anzeigeeinrichtung 24 wird vorzugsweise ein grafikfähiger Bildschirm, als Eingabeeinrichtung 25 eine Tastatur und als Steuereinrichtung 26 eine speicherprogrammierbare Steuerung oder ein Personalcomputer eingesetzt. Tastatur und Bildschirm können als Touch Screen ausgebildet sein bzw. als sensitiver Bildschirm zur Eingabe von Befehlen.

Im Rahmen der Erfindung ist auch daran gedacht, die in den Figuren als Drahtverbindungen dargestellten Steuerleitungen 20 und Busverbindungen 21 als drahtlose elektrische oder optische Signalverbindungen auszubilden.

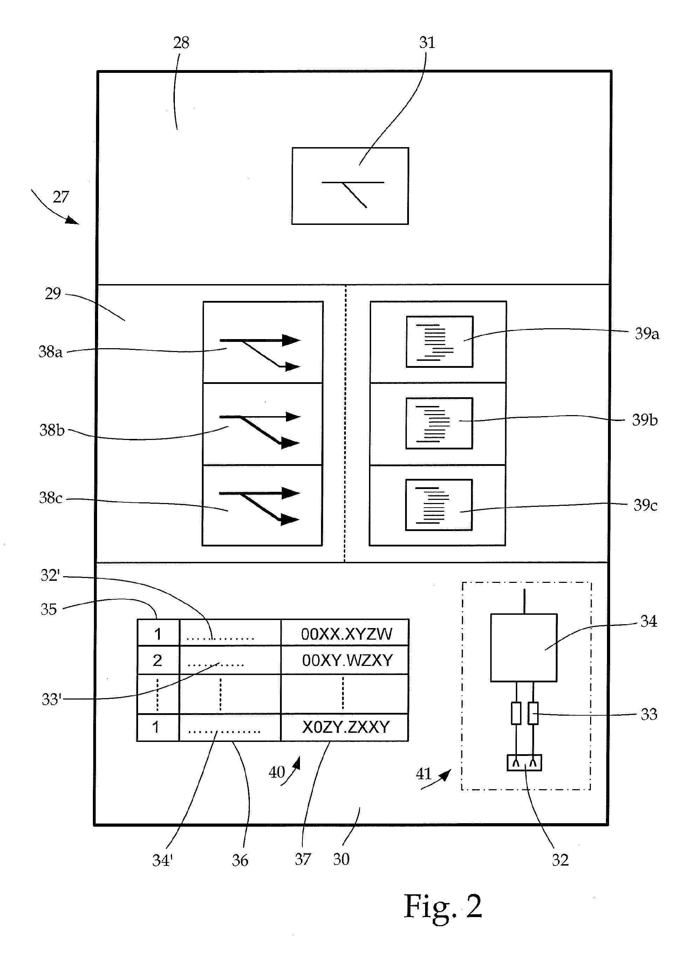

Bei der Planung einer Fertigungslinie 1 ist eine Vielzahl von durch den Kunden vorgegebenen Forderungen betreffend Verfahrenstechnik, Logistik und Raumangebot zu berücksichtigen. Daher ist jede Fertigungslinie ein Unikat. Mit erfindungsgemässen Verfahren ist es möglich, auf eine einfache Art und Weise für eine zu definierende Fertigungslinie 1 erforderliche Steuerungs-Software bzw. Steuerprogramme zu erstellen sowie technische Unterlagen, wie z.B. Elektroschemata oder Stücklisten zu generieren. Dabei umfassen die Stücklisten alle physisch für den Bau einer Fertigungslinie 1 benötigten mechanischen Teile und die Steuerungsteile. Die Erstellung entsprechender Listen wird unter Verwendung erfindungsgemässer Verfahren mit Hilfe erfindungsgemässer Vorrichtungen ermöglicht. Zur Ausführung erfindungsgemässer Verfahren sind in einer mit der Steuereinrichtung 26 verbundenen Datenbank 43 für die einzelnen konfigurierbaren Maschinen Datenmodule 27 gemäss Fig. 2 vorgesehen. Es ist auch denkbar, dass die Datenbank 43 Bestandteil der Steuereinrichtung 26 ist.

Anhand der Fig. 2 wird der Aufbau eines Datenmoduls 27 für eine Weiche 8 beschrieben. Das Datenmodul 27 umfasst Grafikdaten 28, die die Visualisierung auf der Anzeigeeinrichtung 24 ermöglichende Daten enthalten. Ferner umfasst das Datenmodul 27 Programmdaten 29. Die Programmdaten 29 umfassen Programmroutinen 39a bis 39c, die den für die betreffende Maschine verfügbaren Betriebsarten 38a bis 38c zugeordnet sind. Bei dem anhand der Zeichnung erläuterten Ausführungsbeispiel ist die Weiche 8 in drei unterschiedlichen Funktionen 38a, 38b und 38c betreibbar, von denen eine auszuwählen ist. In der Betriebsart 38a ist die Weiche 8 als Notauslageweiche A, in der Betriebsart 38b als Notauslageweiche B und in der Betriebsart 38c als Verteilweiche konfigurierbar. Jede der Programmroutinen 39a bis 39c ist zusätzlich parametrierbar, wobei bspw. Grenzwerte einiger Parameter festgelegt werden können.

Zusätzlich enthält das Datenmodul 27 Dokumentationsdaten 30 mit zum ausgewählten Datenmodul 27 bzw. zur entsprechenden Maschine passenden Teiledaten 40, u.a. für die Elektrokomponenten und Schaltungsdaten 41, wobei die durch die Teiledaten 40 dargestellten Informationen mit den durch die Schaltungsdaten 41 dargestellten Informationen übereinstimmen. Beispielsweise entspricht ein Stecker 32' in den Teiledaten 40 einem Stecker 32 in den Schaltungsdaten 41, Klemmen 33' den Klemmen 33 und ein Interface 34' einem Interface 34. In einer Spalte 35 der Teiledaten 40 ist die Anzahl, in einer Spalte 36 die Bezeichnung und in einer Spalte 37 die Artikelnummer der Teile, wie etwa der Elektrokomponenten, aufgelistet. Zusätzlich können die Teiledaten 40 analog zu den Elektrokomponenten alle zum Bau der Weiche 8 benötigten mechanischen Teile darstellen.

Für das Einfügen der Notauslageweiche 8 in eine Fertigungslinie 1 ist die Liniensteuerung 19 in den Editiermodus bzw. den Konfigurationsmodus zu schalten und anschliessend sind in diesem Modus die folgenden Schritte zu durchlaufen:
- Aus der Datenbank 43 wird das Datenmodul 27 "Weiche" ausgewählt.
- Aus den Programmdaten 29 wird die Betriebsart 38a "Notauslage A" ausgewählt.

Auf Grundlage dieser Schritte werden durch das Entwicklungssystem ein Symbolbild 31, die zur Betriebsart 38a gehörende Programmroutine 39a, die Teiledaten 40 und die Schaltungsdaten 41 ausgewählt. Durch das Zusammenfügen der einzelnen Programmdaten 27 bzw. Programmroutinen, welche aus dem jeweiligen Datenmodul 27 einer Maschine der Fertigungslinie 1 ausgewählt werden, entsteht die vollständige Steuerungssoftware der Fertigungslinie 1. In gleicher Art und Weise wird jeweils aus den Teiledaten 40 der Maschinen die Stückliste und aus den Schaltungsdaten 41 das vollständige Schaltschema der Anlage erstellt.

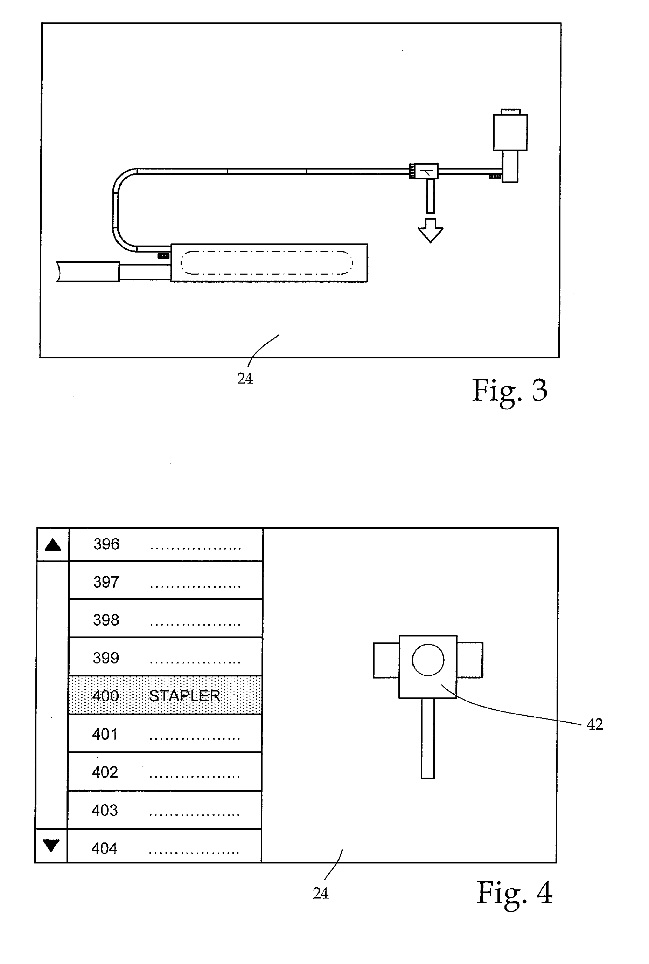

Unter Bezugnahme auf die Fig. 3 bis 6 wird im Folgenden die Integration einer Maschine "Stapler" beschrieben:
Auf der Anzeigeeinrichtung 24 ist gemäss Fig. 3 der bereits geplante und allenfalls konfigurierte Teil der Fertigungslinie 1 dargestellt. Mittels einer auf der Anzeigeeinrichtung 24 angezeigten Liste sind alle in der Datenbank (43) verfügbaren Maschinen bzw. deren Datenmodule (27) auswählbar, wie dies aus Fig. 4 ersichtlich ist. Im Beispiel steht die Auswahl auf der Maschine mit der Nummer 400, was einer Stapeleinrichtung 10 entspricht, deren Symbol auf der rechten Seite der Anzeigeeinrichtung 24 dargestellt ist.

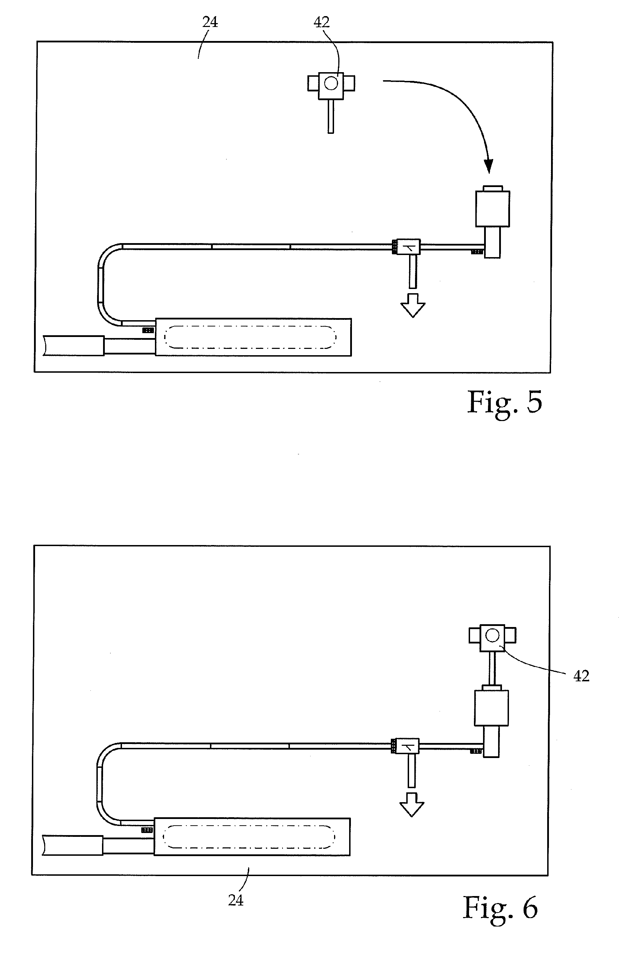

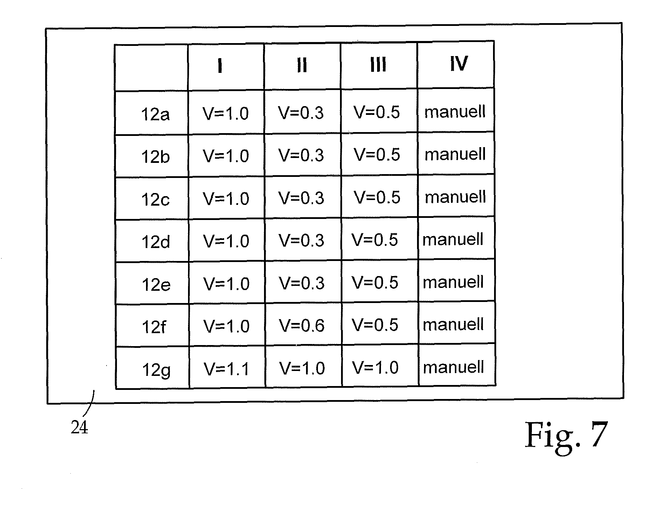

Nach einer Bestätigung der Auswahl wird das Symbol 42 der Stapeleinrichtung 10 in die Sichtdarstellung des Layouts der Fertigungslinie 1 kopiert, wie in Fig. 5 dargestellt. Anschliessend wird das Symbol 42, wie in Fig. 6 dargestellt, mit den bekannten Eingabemitteln, wie etwa einer Computer-Maus oder einem Touch Pad an die korrekte Stelle in der Fertigungslinie 1 verschoben und mit dieser verbunden. Die Verbindung im Bereich vorgegebener Kopplungsbereiche kann automatisch erfolgen. Der beschriebene Vorgang des Hinzufügens einer neuen Maschine wird solange wiederholt, bis die Fertigungslinie 1 vollständig geplant und konfiguriert ist. Zur Vervollständigung sind dann noch die direkt mit der Liniensteuerung 19 verbundenen Steuerungskomponenten, wie Start-, Stopp-, Notstopp-Tasten und Meldeleuchten, von Maschinen ohne Steuerung in der gleichen Art zu definieren und einzufügen. Nach jeder Hinzufügung einer neuen Maschine werden automatisch die Stückliste und das Schaltschema aktualisiert. Aneinandergereihte, die Abbindestrecke 7 bildende Transportbänder 12a bis 12i können zu Bandgruppen zusammengefasst werden, die in verschiedenen, durch den Bediener auszuwählenden Betriebsarten betreibbar sind. Als Beispiel dient die in Fig. 1 dargestellte Abbindestrecke 7, deren mögliche Betriebsarten aus der Tabelle in der Fig. 7 ersichtlich sind. Die Betriebsarten werden bei der Planung vordefiniert und können später durch den Bediener der Fertigungslinie 1 angewählt werden. In Fig. 7 bezeichnet "V" die relativen Geschwindigkeiten der Transportbänder 12a bis 12i bezüglich der Verarbeitungsgeschwindigkeit des Klebebinders 5.

In der Betriebsart I werden die Transportbänder 12a bis 12f mit der gleichen Geschwindigkeit wie der Klebebinder 5 angetrieben und das Transportband 12g mit 1,1-facher Geschwindigkeit. Das bedeutet, dass die einzelnen von dem Klebebinder 5 gebundenen Produkte auf dem Transportband 12g mit einem grösseren Abstand voneinander transportiert werden.

In der Betriebsart II und der Betriebsart III werden die Transportbänder 12a bis 12f mit einer kleineren Geschwindigkeit als der Klebebinder 5 angetrieben, was zur Folge hat, dass sich die Druckprodukte auf den Transportbändern 12a bis 12f gegenseitig geschuppt überlappen. Dadurch kann die Kühlzeit bei gleichbleibender Transportstrecke erhöht werden.

In der Betriebsart IV sind die relativen Geschwindigkeiten der Transportbänder 12a bis 12g durch den Bediener frei wählbar. Mittels der Liniensteuerung 19 lassen sich im Betriebsmodus alle Maschinen der Fertigungslinie 1 konfigurieren bzw. die Betriebsparameter der Maschinen an den zu fertigenden Fertigungsauftrag anpassen. Die Anwendung des am Beispiel einer Klebebindelinie beschriebenen Verfahrens ist nicht auf den Einsatz an Klebebindelinien beschränkt, sondern es lässt sich ebenso an beliebigen Anlagen einsetzen, die aus miteinander in unterschiedlicher Art verkettbaren Maschinen besteht, wie Buchstrassen, Sammelheftlinien, Einstecklinien und ähnlichen Anlagen der Druckweiterverarbeitung. Das Verfahren eignet sich insbes. als effizientes Planungswerkzeug bei der Abklärung der Kundenbedürfnisse, indem die Editiersoftware auf einem Standard-PC lauffähig gestaltet wird und somit zusammen mit dem Kunden beliebig zusammengesetzte Fertigungslinien planbar sind. Vorzugsweise sind dazu vorab der Gebäudeplan mit den bereits installierten Maschinen bzw. Fertigungslinien darstellende Gebäudedaten eingebbar, wodurch sich die neu zu konzipierende Fertigungslinie bereits von Anfang an optimal in die bestehende Infrastruktur einbetten lässt. Der Layoutplan kann anschliessend direkt in der Marketingabteilung weiterbearbeitet werden. Zusätzlich kann in dieser Phase die Funktion der Anlage in Bezug auf die Logistik simuliert und dem Kunden gezeigt werden.

Ein weiterer Vorteil der Erfindung ergibt sich dadurch, dass Änderungen und Ausbauten an bereits existierenden Fertigungslinien 1 bei Kunden mit den gleichen Mitteln und auf die gleiche einfache Art und Weise, ohne Heranziehung eines Spezialisten, durchgeführt werden können. Sollen neue oder fremde Maschinen hinzugefügt werden, die zum Zeitpunkt der Auslieferung der Fertigungslinie noch nicht bekannt waren, sind vorab die zur Ausführung erfindungsgemässer Verfahren benötigte Konfigurationssoftware und die Datenbank 43 auf den neusten Stand aufzurüsten.

## Patentansprüche

1. Verfahren zum Planen und Konfigurieren von Anlagen zur Herstellung von Druckprodukten mit einer Mehrzahl von in einer Fertigungslinie (1) angeordneten Maschinen, wobei jeder Maschine ein zumindest eine Sichtdarstellung der Maschine ermöglichende Grafikdaten enthaltendes Datenmodul (27) zugeordnet ist, **dadurch gekennzeichnet, dass** mindestens zwei Maschinen zu einer Fertigungslinie (1) oder zu einem Teil einer Fertigungslinie (1) zusammengestellt und die den zusammengestellten Maschinen zugeordneten Datenmodule (27) ausgewählt werden und auf Grundlage der Grafikdaten der ausgewählten Datenmodule (27) eine Sichtdarstellung der zusammengestellten Maschinen erzeugt wird.

2. Verfahren nach Anspruch 1, **dadurch gekennzeichnet, dass** die Grafikdaten mögliche Kopplungsbereiche der zusammenzustellenden Maschinen, an denen diese miteinander verbunden werden können, bezeichnende Schnittstellendaten enthalten und die Sichtdarstellung automatisch unter Berücksichtigung der Schnittstellendaten so erfolgt, dass die zusammengestellten Maschinen an ihren Kopplungsbereichen miteinander verbunden sind.

3. Verfahren nach Anspruch 1 oder 2, **dadurch gekennzeichnet, dass** auf Grundlage der Grafikdaten das Zusammenwirken der zusammengestellten Maschinen verdeutlichende Sichtdarstellungen erzeugt werden, insbes. zwei, drei oder mehr zeitlich und/oder räumlich voneinander getrennte Sichtdarstellung in unterschiedlichen Betriebszuständen der Maschinen erzeugt werden.

4. Verfahren nach einem der vorhergehenden Ansprüche, **dadurch gekennzeichnet, dass** mindestens zwei Datenmodule (27) zur Ansteuerung der zusammenzustellenden Maschinen betreibbare Programme bildende Programmdaten (29) enthalten und die Programmdaten (29) bei der Auswahl dieser Datenmodule (27) zu einem zur Ansteuerung der zusammengestellten Maschinen betreibbaren Programm verknüpft werden.

5. Verfahren nach Anspruch 4, **dadurch gekennzeichnet, dass** die Programmdaten (29) eines Datenmoduls (27) zum Betreiben der Maschine in mindestens einer Betriebsart (38a, 38b, 38c) gesonderte Programmroutinen (39a, 39b, 39c) enthalten und vor, während oder nach der Auswahl dieses Datenmoduls eine Programmroutine (39a, 39b, 39c) ausgewählt und mit den Programmdaten (29) anderer Datenmodule (27) zu einer zum Ansteuern der zusammengestellten Maschine betreibbaren Steuerungssoftware verknüpft werden.

6. Verfahren nach Anspruch 4 oder 5, **dadurch gekennzeichnet, dass** mindestens ein Programm und/oder eine Programmroutine (39a, 39b, 39c) parametrierbar ist.

7. Verfahren nach einem der vorhergehenden Ansprüche, **dadurch gekennzeichnet, dass** mindestens ein Datenmodul (27) einzelne Bauelemente der Maschine darstellende Teiledaten (40) und/oder eine elektrische Schaltung der Maschine darstellende Schaltungsdaten (41) aufweist und bei der Auswahl des mindestens einen Datenmoduls (27) automatisch auf Grundlage der Teiledaten (40) die Bauelemente der zusammengestellten Maschinen darstellende Stückliste und/oder auf Grundlage der Schaltungsdaten (41) ein die elektrische Verknüpfung der zusammengestellten Maschinen darstellendes Schaltschema erzeugt werden.

8. Verfahren nach Anspruch 7, **dadurch gekennzeichnet, dass** auf Grundlage der Teiledaten (40) eine Sichtdarstellung der Stückliste und/oder auf Grundlage der zusammengestellten Schaltungsdaten (41) eine Sichtdarstellung des Schaltschemas erzeugt wird.

9. Verfahren nach Anspruch 8, **dadurch gekennzeichnet, dass** die Fertigungslinie (1) und/oder die Stückliste und/oder das Schaltschema gleichzeitig dargestellt werden.

10. Verfahren nach einem der vorhergehenden Ansprüche, **dadurch gekennzeichnet, dass** auf Grundlage von eines die Fertigungslinie (1) aufnehmende Gebäudes darstellenden Gebäudedaten und den Grafikdaten eine die Anordnung der Fertigungslinie (1) oder von Teilen davon in dem Gebäude zeigende Sichtdarstellung erzeugt wird.

11. Vorrichtung zum Planen und Konfigurieren von Anlagen zur Herstellung von Druckprodukten mit einer Mehrzahl von in einer Fertigungslinie (1) angeordneten Maschinen mit einem Verfahren nach einem der vorhergehenden Ansprüche, mit einer eine Mehrzahl von Datenmodulen (27) enthaltenden Datenbank (43), einer Anzeigeeinrichtung (24) zur Sichtdarstellung von die Datenmodule (27) kennzeichnenden Informationsinhalten, einer Wähleinrichtung (25) zum Auswählen einzelner Datenmodule (27) und einer Steuereinrichtung (26) zur eine Sichtdarstellung einer Fertigungslinie (1) oder von Teilen davon mit den Maschinen entsprechend den ausgewählten Datenmodulen (27) bewirkenden Ansteuerung der Anzeigeeinrichtung (24).

12. Vorrichtung nach Anspruch 11, **dadurch gekennzeichnet, dass** mindestens ein Datenmodul (27) Grafikdaten (28) und/oder Programmdaten (29) und/oder Teiledaten (40) und/oder Schaltungsdaten (41) enthält.

13. Vorrichtung nach Anspruch 11 oder 12, **gekennzeichnet durch** eine Steuereinrichtung (26) zum Ansteuern einer Anlage zur Herstellung von Druckprodukten.

14. Anlage zur Herstellung von Druckprodukten mit einer Mehrzahl von in einer Fertigungslinie (1) angeordneten Maschinen und einer Vorrichtung nach einem der Ansprüche 11 bis 13.

15. Anlage nach Anspruch 14, **dadurch gekennzeichnet, dass** die Maschinen der Fertigungslinie (1) als Anleger (2), Zusammentragmaschine (3), Überführungseinrichtung (4), Binder, insbes. Klebebinder (5), Abtransporteinrichtung (6), Abbindestrecke (7), Notauslageweiche (8), Schneidmaschine (9), Stapeleinrichtung (10), Auslageeinrichtung (11), Einsteckeinrichtung oder als Sammelhefter ausgebildet sind.
